# EUROPÄISCHE PATENTSCHRIFT

(11) **EP 0 727 602 B1**
(45) Veröffentlichungstag und Bekanntmachung des Hinweises auf die Patenterteilung: **22.09.1999**
(21) Anmeldenummer: 95102077.5
(22) Anmeldetag: 15.02.1995
(51) Int. Cl.: F16K 39/02, F16K 31/06

(54) **Direktgesteuertes hydraulisches Druckventil**
Directly controlled hydraulic pressure valve
Soupape de pression hydraulique à commande directe

(43) Veröffentlichungstag der Anmeldung: 21.08.1996
(73) Patentinhaber: DENISON HYDRAULIK GmbH, 40721 Hilden (DE)
(72) Erfinder: Backé, Wolfgang, em.Prof. Dr.-Ing. Dr.h.c. mult., D-52072 Aachen (DE); Latour, Christoph, Dipl.-Ing., D-52511 Geilenkirchen (DE); Killing, Bernd, Dipl.-Ing., D-40699 Erkrath (DE)
(74) Vertreter: von Raffay, Vincenz, Dipl.-Ing.

(56) Entgegenhaltungen:
- EP-A- 0 056 891
- WO-A-84/03344
- DE-A- 3 942 026
- DE-C- 847 388

## Beschreibung

Die Erfindung betrifft ein Druckventil nach dem Oberbegriff des Anspruches 1.

Bisher bekannte, hydraulische Druckventile haben in Bezug auf ihren Aufbau und ihre Funktion einige wesentliche Nachteile. Zum einen sind direktgesteuerte Druckventile (z.B. Kegelsitzventile mit vorgespannter Feder oder Proportionalmagnet) nur für sehr geringe hydraulische Leistungen geeignet, da die Ventilkegel druckunausgeglichen sind und somit bei größeren Kegeldurchmessern sehr große Druckkräfte entstehen. Außerdem wirken auf den Ventilkegel Strömungskräfte ein, die als Störgröße in die Kräftebilanz des Kegels eingehen und somit zu erheblichen Regelabweichungen führen. Zum anderen können mit vorgesteuerten Druckventilen, deren Pilotstufe i.a. ein direktgesteuertes Druckventil ist, zwar erheblich größere hydraulische Leistungen gesteuert werden, jedoch weisen diese Ventile ebenfalls gravierende Nachteile auf. Durch die am Hauptstufenkolben angreifenden Strömungskräfte werden zusätzlich zu den Regelabweichungen des Piloten weitere Abweichungen im Gleichdruckverhalten verursacht, so daß die stationären Druck-Durchfluß-Kennlinien i.a. eine steigende Charakteristik aufweisen. Außerdem ist die Dynamik der vorgesteuerten Ventile vorsteuerdruckabhängig, d.h., bei kleinen zur Verfügung stehenden Vorsteuerdrücken weisen die Ventile eine stark verringerte Dynamik auf. Als weitere Nachteile der vorgesteuerten Ventile können der konstruktive bzw. fertigungstechnische Mehraufwand und die Verschmutzungsempfindlichkeit genannt werden.

Um ein direktgesteuertes Druckventil aufbauen zu können, müssen die auf den Ventilkolben einwirkenden Störkräfte, insbesondere die Strömungskräfte, minimiert werden, da diese unmittelbar in die den zu regelnden Druck bestimmende Kräftebilanz als Störgröße eingehen.

Aus der einschlägigen Literatur (z.B. Dissertation "Strömungskraftkompensation in direktgesteuerten, elektrohydraulischen Stetigventilen", RWTH Aachen 1992, von H.-J. Feigel) sind zwar verschiedene Maßnahmen zur Kompensation der Strömungskräfte an hydraulischen Ventilen bekannt, jedoch wird eine für den Anwendungsfall der Druckventile ausreichende Kompensation der Kräfte über den gesamten Arbeitsbereich mit den vorgeschlagenen Maßnahmen nicht erreicht. In den Niederschriften zum 11. Aachener Fluidtechnischen Kolloquium 1994 schlägt C. Latour auf den Seiten 35 bis 50 ein hydraulisches 2-Wege-Cartridge-Element vor, das grundsätzlich so aufgebaut ist, wie in dem Oberbegriff des Patentanspruches 1 definiert. Dieses Element besteht im wesentlichen aus einer in einer Einbaubohrung angeordneten, äußeren Ventilhülse, einem zylindrischen, axial fixierten Zulaufteil und einem becherförmig ausgebildeten, längsbeweglichen Hohlkolben. Dem Aufbau dieses Cartridgeelementes liegt der Gedanke zugrunde, die vor der Steuerkante auftretende Beschleunigung und Umlenkung der Strömung und die dadurch verursachte Änderung des statischen Druckes nicht auf das zu bewegende sondern auf das axial fixierte Ventilelement einwirken zu lassen. Dadurch wirken auf den Hohlkolben im nicht strömungskraftkompensierten Zustand im Vergleich zu konventionellen Kolbenventilen nur sehr geringe Strömungskräfte ein. Diese noch verbleibenden, geringen Kräfte werden mit einer Umlenkung des Freistrahles kompensiert, wobei der Druckmittelstrahl hinter der Steuerkante des Ventiles aufgeteilt wird. Ein Teil dieses Strahles strömt unmittelbar radial durch die in die äußere Ventilhülse eingebrachten Auslaßöffnungen ab. Der andere Teil wird über die zwischen den Auslaßöffnungen verbleibenden Stege in die Umlenkkammer geleitet, in der der Druckmittelstrahl eine annähernd spiralförmige Umlenkung erfährt und die Kammer abschließend durch die Auslaßöffnungen verläßt. Die Umlenkung des Druckmittelstrahles in der Umlenkkammer stützt sich zumindest teilweise auf den becherförmigen Hohlkolben in eine den Strömungswiderstand öffnende Richtung ab, so daß bei geeigneter Gestaltung der Umlenkkammer keine nennenswerten Strömungskräfte über einen großen Arbeitsbereich auftreten. Ein weiterer wesentlicher Vorteil dieses Strömungswiderstandes mit becherförmigem Hohlkolben liegt darin, daß der Hohlkolben auch ohne Druckausgleichsbohrung im geschlossenen Zustand vollständig kraftausgeglichen ist.

Der Erfindung liegt die Aufgabe zugrunde, ein Druckventil nach dem Oberbegriff des Anspruchs 1 zu schaffen, das bei dieser Ansteuerung für höhere hydraulische Leistungen einsetzbar ist und das dabei ein sehr gutes Gleichdruckverhalten aufweist.

Diese Aufgabe wird grundsätzlich durch das Kennzeichen des Anspruches 1 gelöst.

Das Druckventil nach der Erfindung bildet einen druckausgeglichenen und vollständig strömungskraftkompensierten Strömungswiderstand.

Die Differenz zwischen der Öffnungsrichtung der Steuerkante wirkenden Druckkraft des Druckstößels und der in Schließrichtung wirksamen Kraft der Einrichtung zur Erzeugung einer entgegengesetzten Kraft beschleunigt den Ruhekolben, bis ein Kräftegleichgewicht erreicht ist, so daß über die Ventilsteuerkante überschüssiger Volumenstrom des Systems abgeführt werden kann. Durch die Verwendung eines vollständig druckausgeglichenen und strömungskraftkompensierten Strömungwiderstandes lassen sich im Vergleich zu bekannten, direktgesteuerten Druckventilen, sehr viel höhere hydraulische Leistungen direkt steuern. Je nach Ausführung kann das Ventil mit Druckbegrenzungs-, Staudruck- oder Druckminderfunktion ausgestattet sein.

Vorteilhafte Ausgestaltungen sind Gegenstand der Ansprüche 2 his 5.

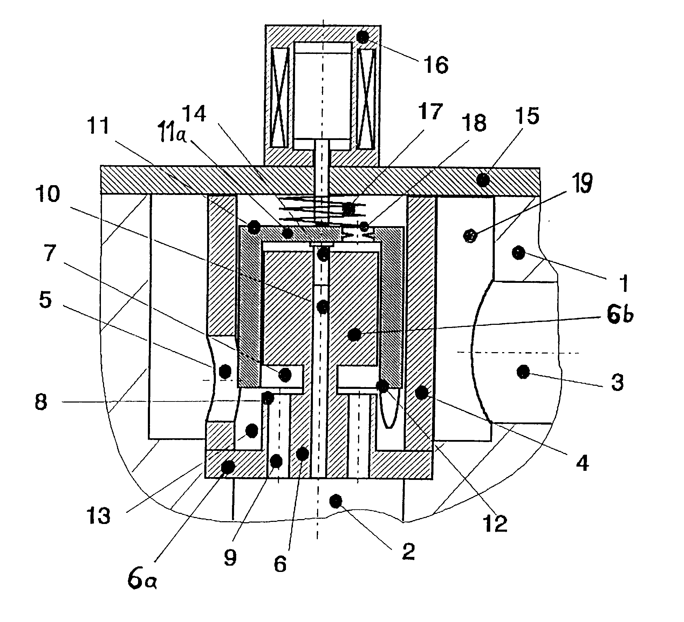

Im folgenden wird die Erfindung unter Hinweis auf die Zeichnung anhand eines Ausführungsbeispiels näher erläutert.

In dem Ventilgehäuse 1 ist eine Einbaubohrung 19 ausgebildet, in die das eigentliche Ventil, das auch als Cartridgeelement bezeichnet wird, einsetzbar ist. In das Ventilgehäuse führt eine Zuströmbohrung 2, in der der zu begrenzende Strömungsmitteldruck anliegt. Die Abströmbohrung 3 des Ventilgehäuses ist mit dem Rücklauf zum Tank verbunden.

In die Einbaubohrung 19 ist eine Ventilhülse 4 eingesetzt. Auslauföffnungen oder -bohrungen 5 ermöglichen, daß der Strömungsmittelstrahl annähernd radial in die Einbaubohrung des Ventilgehäuses abfließt.

Ein Zulaufteil 6, dessen Durchmesser in einem ersten Abschnitt 6b geringer als der Innendurchmesser der Ventilhülse ausgeführt ist, und der einen zweiten Abschnitt 6a größeren Durchmessers aufweist, ist in der Zylinderbohrung der Ventilhülse 4 angeordnet. Die äußere Ventilhülse liegt stirnseitig auf dem Abschnitt 6a größeren Durchmessers auf. Eine Ringnut 7 ist in dem Abschnitt 6b geringeren Durchmessers des Zulaufteils 6 ausgebildet. Die Ringnutkante 8 dieser Ringnut 7 bildet zusammen mit der angrenzenden Hohlkolbenkante 12 eines Hohlkolbens 11 das Steuerkantenpaar des Druckventils.

Einströmkanäle 9 sind in die Stirnseite des Abschnittes 6a größeren Durchmessers des Zulaufteils eingebracht und stellen eine Verbindung zwischen der Zuströmbohrung 2 und der Ringnut des Zulaufteils 6 her. In dem Zulaufteil 6 ist eine Durchgangsbohrung 10 auf der Symmetrieachse vorgesehen.

Der Hohlkolben 11 ist becherförmig ausgebildet und zwischen der äußeren Ventilhülse 4 und dem zylindrischen Zulaufteil 6 in einem entsprechend dimensionierten Ringraum axial verschiebbar angeordnet, so daß über diese axiale Verschiebung des Hohlkolbens ein Teil der in den zylindrischen Zulaufteil eingebrachten, umlaufenden Ringnut 7 versperrt bzw. freigegeben wird.

In einer Umlenkkammer 13 wird zur Strömungskraftkompensation ein Anteil des Strömungsmittelstrahls in eine spiralförmige Bewegung versetzt, um somit eine nach oben gerichtete, kompensierende Kraft zu erzeugen.

In die Durchgangsbohrung 10 des Zulaufteils 6 ist ein Druckstößel 14 eingesetzt. Dieser Druckstößel übt eine druckproportionale Kraft auf den Boden lla des becherförmigen Hohlkolbens 11 in eine den Strömungswiderstand öffnende Richtung aus. Ein Deckel 15 verschließt die Einbaubohrung 19.

Eine Einrichtung 16 erzeugt eine Kraft, die der Kraft des Druckstößels 14, der ein Druckfühlelement bildet, entgegengesetzt gerichtet ist. Diese Einrichtung kann z.B. eine vorgspannte Feder mit mechanischer Verstellung oder auch ein Proportionalmagnet sein.

Eine Feder 17 bringt den Strömungswiderstand im nichtdruckbeaufschlagten Fall in Schließposition. Eine Dämpfungsblende 18 legt die Dämpfungseigenschaften des Druckventils fest.

Das von der Zuströmbohrung 2 über die Einströmkanäle 9 und die Ringnut 7 über das Steuerkantenpaar 8,12 in die Umlenkkammer 13 gelangende Strömungsmittel wird dort aufgeteilt, so daß ein Teil des Druckmittelstrahles unmittelbar durch die Auslaßöffnungen 5 des Ventilgehäuses 4 annähernd radial in die Einbaubohrung des Ventilgehäuses 1 abströmt, und der andere Teil auf die zwischen den Auslaßöffnungen verbleibenden Stege strömt und in der Umlenkkammer 13 eine annähernd spiralförmige Umlenkung erfährt, so daß eine den Strömungswiderstand öffnende (kompensierende) Kraftkomponente entsteht, ehe der Teilstrahl ebenfalls durch die Auslaßöffnungen 5 die Umlenkkammer verläßt.

Steht in der Zuströmbohrung 2 des Ventilgehäuses 1 Drucköl an, pflanzt sich dieser Druck durch die Durchgangsbohrung 10 des Zulaufteiles 6 fort, so daß auf den Druckstößel 14 eine axial nach oben gerichtete, druckproportionale Kraft entsteht. Diese Kraft wird über die obere Stirnfläche des Druckstößels 14 auf den becherförmigen Hohlkolben 11 übertragen und wirkt in eine den Strömungswiderstand öffnende Richtung. Dieser nach oben gerichteten, druckproportionalen Kraft, wird eine nach unten wirkende, äußere Kraft der Einrichtung 16 entgegengesetzt. Die sich aus der Kräftebilanz ergebende resultierende Kraft beschleunigt den becherförmigen Hohlkolben 11 bis ein Kräftegleichgewicht vorliegt. Ist beispielsweise die Kraft des Druckstößels 14 größer als die äußere, nach unten gerichtete Kraft der Einrichtung 16 zur Erzeugung einer Kraft, bewegt sich der Hohlkolben 11 nach oben, bis ein Kräftegleichgewicht zwischen der Druckkraft und der äußeren Kraft erreicht ist. Dabei wird ein Teilquerschnitt der Ringnut 7 des Zulaufteils 6 freigegeben und es setzt eine von innen nach außen gerichtete Durchströmung des Ventiles ein. Der überschüssige Volumenstrom des Systems wird somit zum Tank abgeführt. Sinkt der zu regelnde Systemdruck in der Zuströmbohrung 2 ab, wird der Hohlkolben 11 in Schließrichtung bewegt, bis ein Kräftegleichgewicht zwischen druckproportionaler Kraft des Druckstößels 14 und der äußeren Kraft vorliegt.

## Patentansprüche

1. Direktgesteuertes hydraulisches Druckventil mit einer äußeren Ventilhülse (4), die in die durch einen Deckel (15) verschließbare Einbaubohrung (19) eines Ventilgehäuses (1) eingesetzt ist,
mit einem im Inneren der Ventilhülse angeordneten, zylindrischen Zulaufteil (6), dessen Durchmesser in einem ersten Abschnitt (6b) geringer ist als der Innendurchmesser der Ventilhülse und das einen zweiten Abschnitt (6a) größeren Durchmessers aufweist, auf dem die äußere Ventilhülse (4) stirnseitig aufliegt,
mit einem becherförmigen Hohlkolben (11), der in einem Ringraum zwischen der Ventilhülse (4) und dem Zulaufteil (6) mit seinem Boden (11a) von dem Abschnitt (6a) größeren Durchmessers des Zulaufteils (6) entfernt liegend längsbeweglich angeordnet ist,
mit einer Ringnut (7), die in den Abschnitt (6b) geringeren Durchmessers des Zulaufteils (6) eingebracht ist,
mit axialen Einströmkanälen (9), die in die Stirnfläche des Abschnittes (6a) größeren Durchmessers des Zulaufteils eingebracht sind, und die die Ringnut (7) mit einer Zuströmbohrung (2) in dem Ventilgehäuse (1) verbinden, und
mit einer mit Auslaßöffnungen (5) in der Ventilhülse (4) verbundenen Umlenkkammer (13) am Außenumfang des Abschnitts (6b) kleineren Durchmessers des Zulaufteils angrenzend an den Abschnitt (6a) größeren Durchmessers, wobei die Ringnutkante (8) und die angrenzende Hohlkolbenkante (12) die Ventilsteuerkanten bilden, dadurch gekennzeichnet, daß in der Achse des Zulaufteils (6) eine Durchgangsbohrung (10) vorgesehen ist, in der ein Druckstößel (14) verschiebbar ist, dessen nicht in der Durchgangsbohrung (10) liegende Stirnfläche an dem Boden (11a) des becherförmigen Hohlkolbens (11) anliegt, und
daß eine Einrichtung (16) eine Kraft auf den Hohlkolben (11) ausübt, die der Druckkraft des Druckstößels (14) entgegengesetzt gerichtet ist.

2. Druckventil nach Anspruch 1, dadurch gekennzeichnet, daß in dem Boden (11a) des becherförmigen Hohlkolbens (11) eine Dämpfungsblende (18) vorgesehen ist.

3. Druckventil nach Anspruch 1 oder 2, dadurch gekennzeichnet, daß zwischen dem Boden (11a) des becherförmigen Hohlkolbens (11) und der Innenseite des Deckels (5) eine in Schließrichtung wirkende Feder (17) angeordnet ist.

4. Druckventil nach einem oder mehreren der vorstehenden Ansprüche, dadurch gekennzeichnet, daß die Einrichtung (16), die eine Kraft auf den Hohlkolben (11) ausübt, durch eine vorgespannte Feder mit mechanischer Verstellung gebildet ist.

5. Druckventil nach einem oder mehreren der vorstehenden Ansprüche 1 bis 3, dadurch gekennzeichnet, daß die Einrichtung (16), die eine Kraft auf den Hohlkolben (11) ausübt, durch einen Elektromagneten gebildet ist.

## Claims

1. Directly controlled, hydraulic pressure valve having an outer valve sleeve (4), which is inserted in the fitting bore (19), closable by a cover (15), of a valve body (1), having a cylindrical feed part (6), located in the interior of the valve sleeve and whose diameter in a first section (6b) is smaller than the internal diameter of the valve sleeve and which has a second section (6a) with a larger diameter on which the outer valve sleeve (4) frontally engages, having a cup-shaped hollow plunger (11), which is horizontally and longitudinally movably placed in an annular space between the valve sleeve (4) and the feed part (6) with its bottom (11a) remote from the larger diameter section (6a) of the feed part (6), having an annular groove (7) made in the smaller diameter section (6b) of the feed part (6), having axial inflow channels (9) made in the end face of the larger diameter section (6a) of the feed part and which link the annular groove (7) with an inflow bore (2) in the valve body (1) and having a deflecting chamber (13) connected with outlet ports (5) in the valve sleeve (4) located on the outer circumference of the smaller diameter section (6b) of the feed part adjacent to the larger diameter section (6a), the annular groove edge (8) and the adjacent hollow plunger edge (12) forming the valve control edges, characterized in that in the axis of the feed part (6) is provided a through bore (10), in which is displaceable a push rod (14), whose end face not located in the through bore (10) engages on the bottom (11a) of the cup-shaped hollow plunger (11) and that a device (16) exerts a force on the hollow plunger (11), which is directed oppositely to the compressive force of the push rod (14).

2. Pressure valve according to claim 1, characterized in that a damping diaphragm (18) is provided in the bottom (11a) of the cup-shaped hollow plunger (11).

3. Pressure valve according to claim 1 or 2, characterized in that a spring (17) acting in the closing direction is provided between the bottom (11a) of the cup-shaped hollow plunger (11) and the inside of the cover (5).

4. Pressure valve according to one or more of the preceding claims, characterized in that the device (16) exerting a force on the hollow plunger (11) is formed by a pretensioned spring with mechanical adjustments.

5. Pressure valve according to one or more of the preceding claims 1 to 3, characterized in that the device (16) exerting a force on the hollow plunger (11) is formed by an electromagnet.

## Revendications

1. Soupape de pression hydraulique commandée directement avec un manchon de soupape extérieur (4) qui est monté dans la forure de montage (19) pouvant être fermée par un couvercle (15) d'une boîte de soupape (1),
avec une pièce d'entrée cylindrique (6) placée à l'intérieur du manchon de soupape, pièce d'entrée dont le diamètre est plus faible dans une première section (6b) que le diamètre intérieur du manchon de soupape et qui présente une seconde section (6a) de plus grand diamètre sur laquelle repose le manchon de soupape extérieur (4) du côté de la face,
avec un piston creux en forme de godet (11) qui est placé déplaçable dans le sens de la longueur dans un espace annulaire entre le manchon de soupape (4) et la pièce d'entrée (6) couché avec son fond (11a) éloigné de la section (6a) de plus grand diamètre de la pièce d'entrée (6),
avec une rainure annulaire (7) qui est ménagée dans la section (6b) de plus petit diamètre de la pièce d'entrée (6),
avec des canaux d'admission axiaux (9) qui sont mis en place dans la face frontale de la section (6a) de plus grand diamètre de la pièce d'entrée et qui relient la rainure annulaire (7) à une forure d'admission (2) dans la boîte de soupape (1) et
avec une chambre de renvoi (13) reliée aux orifices de sortie (5) dans le manchon de soupape (4) sur le périmètre extérieur de la section (6b) de plus petit diamètre de la pièce d'entrée adjacente à la section (6a) de plus grand diamètre, l'arête de rainure annulaire (8) et l'arête adjacente de piston creux (12) formant les arêtes directrices de la soupape,
caractérisée en ce
qu'une forure de passage (10) est prévue dans l'axe de la pièce d'entrée (6), forure dans laquelle un poussoir (14) est déplaçable dont la face frontale qui n'est pas dans la forure de passage (10) repose sur le fond (11a) du piston creux en forme de godet (11) et
qu'un dispositif (16) exerce une force sur le piston creux (11) qui est dirigée en sens inverse de la force de pression du poussoir (14).

2. Soupape de pression selon la revendication 1, caractérisée en ce qu'un obturateur d'amortissement (18) est prévu dans le fond (11a) du piston creux en forme de godet (11).

3. Soupape de pression selon la revendication 1 ou 2, caractérisée en ce qu'un ressort (17), qui agit dans le sens de la fermeture, est placé entre le fond (11a) du piston creux en forme de godet (11) et la face intérieure du couvercle (5).

4. Soupape de pression selon l'une ou plusieurs des revendications précédentes, caractérisée en ce que le dispositif (16), qui exerce une force sur le piston creux (11), est formé par un ressort précontraint avec réglage mécanique.

5. Soupape de pression selon l'une ou plusieurs des revendications précédentes 1 à 3, caractérisée en ce que le dispositif (16), qui exerce une force sur le piston creux (11), est formé par un électro-aimant.
